# EUROPÄISCHE PATENTSCHRIFT

(11) **EP 4 054 905 B1**
(45) Veröffentlichungstag und Bekanntmachung des Hinweises auf die Patenterteilung: **13.09.2023**
(21) Anmeldenummer: 20804491.7
(22) Anmeldetag: 09.11.2020
(51) Int. Cl.: B60T 7/20, B60K 1/04, B60L 15/20, B60T 8/17

(54) **VERFAHREN UND VORRICHTUNG ZUM BREMSEN EINES NUTZFAHRZEUGS MITTELS EINES ELEKTRISCHEN ANTRIEBS**
METHOD AND SYSTEM FOR BRAKING A COMMERCIAL VEHICLE WITH AN ELECTRICAL DRIVE
MÉTHODE ET SYSTÈME POUR FREINER UN VÉHICULE UTILITAIRE AVEC UN PROPULSION ÉLECTRIQUE

(30) Priorität: 08.11.2019 DE 102019130200
(43) Veröffentlichungstag der Anmeldung: 14.09.2022
(73) Patentinhaber: ZF CV Systems Global GmbH, 3006 Bern (CH)
(72) Erfinder: HANSLIK, Daniel, 30916 Isernhagen (DE); HESEDING, Johannes, 30169 Hannover (DE); RICKE, Janik, 31311 Uetze (DE); WALLBAUM, Torsten, 31089 Duingen (DE)
(74) Vertreter: Ohlendorf, Henrike
(86) Internationale Anmeldenummer: PCT/EP2020/081463
(87) Internationale Veröffentlichungsnummer: WO 2021/089867

(56) Entgegenhaltungen:
- EP-A2- 1 234 739
- WO-A1-2013/066242
- GB-A- 2 565 851

## Beschreibung

Die Erfindung betrifft den Bereich der Nutzfahrzeuge und insbesondere das Bremsen eines Nutzfahrzeugs mittels eines elektrischen Antriebs.

Nutzfahrzeuge, die neben einem Verbrennungsmotor als primäre Antriebsquelle zusätzlich einen elektrischen Antrieb zur Unterstützung des Verbrennungsmotors aufweisen, sind bekannt. Die elektrischen Antriebe dienen in den Nutzfahrzeugen beispielsweise, um den Verbrennungsmotor in einem energieeffizienten Drehzahlbereich betreiben zu können oder einen zusätzlichen Schub, beispielsweise beim Anfahren oder Bergauffahren, bereitzustellen. Darüber hinaus kann mit elektrischen Antrieben kinetische und potentielle Energie des Fahrzeugs zurückgewonnen und als elektrische Energie in einem Energiespeicher des elektrischen Antriebs gespeichert werden. Hierdurch ist ein Bremsen des Nutzfahrzeugs möglich.

Es ist außerdem bekannt, dass für Nutzfahrzeuge auch ein Anhängerfahrzeug, das auch kurz Anhänger genannt wird, mit einem elektrischen Antrieb ausgestattet sein kann, um durch den Anhänger eine zusätzliche Antriebskraft für das Nutzfahrzeug, beispielsweise bei einer Bergauffahrt, zur Verfügung zu stellen. In diesem Fall wird das den Anhänger ziehende Nutzfahrzeug auch als Zugfahrzeug bezeichnet. Im Falle eines Anhängers mit einem elektrischen Antrieb ist es möglich, den elektrischen Antrieb zu nutzen, um kinetische und potentielle Energie des Anhängers sowie des Zugfahrzeugs selbst zurückzugewinnen und als elektrische Energie im Energiespeicher des elektrischen Antriebs zu speichern.

Gemäß dem Stand der Technik aktuiert bei einem Gespann aus Zug- und Anhängerfahrzeug ein elektronisches Bremssystem (EBS) des Zugfahrzeugs die Reibbremsen des Zugfahrzeugs und ein elektronisches Anhängerbremssystem (TEBS) die Reibbremsen des Anhängerfahrzeugs im Falle eines gewünschten Bremsmoments. Üblicherweise sendet ein Bremssteuergerät des elektronischen Bremssystems zum Auslösen der Reibbremsen des Anhängerfahrzeugs ein Signal an ein Anhängerbremssteuergerät des elektronischen Anhängerbremssystems. Diese Vorgehensweise ist gemäß dem Stand der Technik für normale Betriebsbremsungen unabhängig vom Vorhandensein eines elektrischen Antriebs gültig.

Ist nun eines der beiden Fahrzeuge des Gespanns, also entweder das Zugfahrzeug oder das Anhängerfahrzeug, mit einem elektrischen Antrieb ausgestattet, so hat sich herausgestellt, dass dieser vorteilhafterweise durch das entsprechende Bremssteuergerät oder Anhängerbremssteuergerät ansteuerbar ist. Insbesondere wird hierbei ausgenutzt, dass bereits gemäß dem Stand der Technik dem Bremssteuergerät nicht nur ein Bremswunsch, sondern auch ein Beschleunigungswunsch eines Fahrers zugeführt wird und so der elektrische Antrieb entsprechen bei der gewünschten positiven oder negativen Beschleunigung durch das Bremssteuergerät oder Anhängerbremssteuergerät eingebunden werden kann.

Häufig weisen Zugfahrzeuge gemäß dem Stand der Technik zusätzlich eine verschleißfreie Dauerbremse auf, die auch Retarder genannt wird und die üblicherweise in die Hinterachse oder Hinterachsen des Zugfahrzeugs integriert ist.

Die Dauerbremse wird bei einem Bremswunsch bevorzugt in die Bremsregelung des elektronischen Bremssystems eingebunden, um den Bremsverschleiß der Reibbremsen zu reduzieren. Somit kann ein sehr großer Anteil normaler Anpassungsbremsungen, beispielsweise bei im Wesentlichen kontinuierlicher Kolonnenfahrt auf der Autobahn oder bei dem Befahren einer Strecke mit Gefälle, alleinig über die Dauerbremsen realisiert werden.

Die Dauerbremse kann hierbei auch über ein dem Bremssteuergerät vorgeschaltetes weiteres Steuergerät angesteuert werden. Sind demnach nur die Dauerbremsen aktiv, wird in einem solchen Fall auch kein Bremswunsch an das Bremssteuergerät und optional das Anhängerbremssteuergerät übergeben. Insbesondere erfolgt im zuletzt genannten Fall die Ansteuerung konventioneller verschleißfreier Dauerbremsen nicht über das elektronische Bremssystem des Zugfahrzeugs, sondern wird beispielsweise von Fahrerassistenzsystemen, wie beispielsweise einer Abstandsregelautomatik unmittelbar angesteuert. Erfolgt demnach ein Bremswunsch durch ein Fahrerassistenzsystem, wird dieser zunächst an den Retarder übermittelt und erst, wenn der Retarder diesen Bremswunsch nicht ausreichend erfüllen kann, wird eine zusätzliche Bremsanforderung vom Fahrerassistenzsystem an das elektronische Bremssystem übermittelt, um die Reibbremsen zu aktivieren.

Ist das Zugfahrzeug oder das Anhängerfahrzeug mit einem elektrischen Antrieb ausgestattet, kann die zusätzliche Bremsanforderung, die vom Fahrerassistenzsystem an das elektronische Bremssystem übertragen wird, an den elektrischen Antrieb weiter übergeben werden, um eine zusätzliche Bremswirkung zu erzeugen und so den Verschleiß der Reibbremsen weiter zu reduzieren.

Diese Art der Ansteuerung der Bremsen ermöglicht eine Reduzierung des Verschleißes der Reibbremsen und gleichzeitig eine Rückgewinnung elektrischer Energie für den elektrischen Antrieb. Die Rückgewinnung elektrischer Energie mit einem elektrischen Antrieb zur Unterstützung der Bremsen oder zum Erzeugen eines Bremsdrehmoments, dass auch kurz Bremsmoment genannt wird, wird auch als Rekuperation bezeichnet.

EP 1 234 739 A2 offenbart ein Verfahren zum Bremsen eines Anhängefahrzeugs, wobei mittels einer Steuer- und/oder Regeleinrichtung eine Gierrate des Anhängefahrzeugs bestimmt wird und auf Grundlage der Gierrate mittels Motor-Generatoren ein regeneratives Bremsmoment ausgelöst wird, mittels dessen das Anhängefahrzeug abgebremst und Energie zurückgewonnen wird.

WO 2013/066242 A1 offenbart ein Steuer- und/oder Regelverfahren für einen Bremsvorgang, wobei mittels einer Steuer- und/oder Regeleinrichtung eine unterstützende Bremsaktion ausgewählt wird. Dabei wird ständig ein totales zur Verfügung stehendes Bremsmoment bestimmt und mittels der Steuer- und/oder Regeleinrichtung ein ausgewählter Anteil des totalen zur Verfügung stehenden Bremsmoments als unterstütztendes Bremsmoment bestimmt und einer unterstützenden Bremse zugewiesen.

GB 2565851 A offenbart ein Steuer- und/oder Regelsystem, mittels dessen ein Gewicht, Abmessungen, ein Volumen oder ein Ort einer Last in einem Fahrzeug bestimmt wird und aufgrunddessen Steuer- und/oder Regeleingriffe wie ein Bremsen vorgenommen werden, um das Fahrzeug stabil zu halten. Aufgabe der vorliegenden Erfindung ist es eine Alternative zur bisherigen Ansteuerung der Bremsen zu finden. Hierbei liegt der Erfindung die Erkenntnis zugrunde, dass Situationen, in denen elektrische Energie zurückgewonnen werden kann, gemäß dem Stand der Technik erst dann eintreten, wenn zuerst ein Retarder vollends angesteuert ist und so nicht die gesamte mögliche Bremsenergie als elektrische Energie zurückgewonnen wird. Weitere Aufgabe der vorliegenden Erfindung ist es daher, die Rückgewinnung elektrischer Energie während des Bremsens eines Nutzahrzeugs oder Gespanns mit einem elektrischen Antrieb zu optimieren oder den elektrischen Antrieb derart in einen Bremsbetrieb zu integrieren, dass elektrische Energie während des Bremsens aus der kinetischen und potentiellen Energie des Zugfahrzeugs oder Gespanns in optimierter Weise zurückgewonnen wird.

Hierzu betrifft die Erfindung ein Verfahren nach Anspruch 1. Die Erfindung umfasst ein Verfahren zum Bremsen eines Nutzfahrzeugs, insbesondere eines Zugfahrzeugs. Das Verfahren umfasst die folgenden Schritte, die mit einem Steuergerät des Nutzfahrzeugs ausgeführt werden. Das Steuergerät des Nutzfahrzeugs ist bevorzugt ein Bremssteuergerät insbesondere eines elektronischen Bremssystems des Nutzfahrzeugs.

Zunächst wird mit dem Steuergerät eine Statusnachricht empfangen. Die Statusnachricht wird von einem elektrischen Antrieb des Nutzfahrzeugs oder eines vom Nutzfahrzeug gezogenen Anhängerfahrzeugs empfangen. Die Statusnachricht zeigt an, dass mit dem elektrischen Antrieb ein bereitstellbares Bremsmoment bereitstellbar ist. Der Begriff "Moment" oder "Drehmoment" bezieht sich hier auf immer auch auf einen Wert. Wird also ein Moment oder Drehmoment so beschrieben, dass es kleiner oder größer als ein anderes Moment bzw. anderes Drehmoment ist, so bezieht sich dies immer auf die entsprechenden Werte des Moments oder Drehmoments. Der Begriff "Moment" wird also synonym für den Begriff "Momentwert" und der Begriff "Drehmoment" synonym für den Begriff "Drehmomentwert" verwendet.

Bevorzugt ist aus der Statusnachricht also ein Wert für ein Drehmoment ableitbar, der einem bereitstellbaren Bremsmoment entspricht, das vom elektrischen Antrieb insbesondere aufgrund der vorherrschenden Betriebsbedingungen bereitstellbar ist. Dieser Wert ist entweder durch Berücksichtigung weiterer Parameter aus der Statusnachricht ableitbar oder ist direkt aus der Statusnachricht an sich entnehmbar.

Hierbei liegt der Erfindung die weitere Kenntnis zu Grunde, dass das bereitstellbare Bremsmoment nicht konstant ist. Vielmehr ist das bereitstellbare Bremsmoment beispielsweise vom Ladezustand eines Energiespeichers des elektrischen Antriebs abhängig. Es ist demnach ein geringeres Bremsmoment für den Fall mit dem elektrischen Antrieb bereitstellbar, in dem der Energiespeicher fast vollständig geladen ist, da in diesem Fall die bei einer Rekuperation gewonnene Energie nicht oder bald nicht mehr gespeichert werden kann. Außerdem ist das bereitstellbare Bremsmoment beispielsweise von der aktuellen Drehzahl des oder der elektrischen Motoren des elektrischen Antriebs abhängig, da ein mit einem elektrischen Motor abgebbares Drehmoment mit zunehmender Drehzahl abnimmt.

Nach dem Empfang der Statusnachricht wird weiter mit dem Steuergerät eine Angebotsnachricht in Abhängigkeit von der Statusnachricht erzeugt, die ein angebotenes Bremsmoment anzeigt. Vorzugsweise enthält die Angebotsnachricht einen Wert für ein Bremsdrehmoment, das durch den elektrischen Antrieb bereitstellbar ist, der genau dem Wert entspricht, der in der Statusnachricht enthalten ist. Das angebotene Bremsmoment entspricht also vorzugsweise dem bereitstellbaren Bremsmoment. Umfasst die Statusnachricht gemäß einer Alternative einen Zustand, Zustandsvariablen, Zustandsparameter und/oder Zustandswerte des elektrischen Antriebs, wie beispielsweise Drehzahl, Energiespeicherladung, Temperatur und/oder weitere Daten, aus denen ein bereitstellbares Bremsmoment ableitbar ist, so wird vorzugsweise aus dem bereitgestellten Zustand ein Wert für das bereitstellbare Bremsmoment zur Erzeugung der Angebotsnachricht abgeleitet oder berechnet.

Die Angebotsnachricht wird dann, insbesondere über einen Bus des Zugfahrzeugs, an mindestens ein weiteres Steuergerät, insbesondere eines Fahrerassistenzsystems, ausgesendet.

Erfindungsgemäß ist somit vorgesehen, dass das Steuergerät, insbesondere das Bremssteuergerät, welches in der Lage ist, den elektrischen Antrieb direkt oder indirekt anzusteuern, wenigstens einem weiteren Steuergerät, beispielsweise eines Fahrerassistenzsystems, das bereitstellbare Bremsmoment des elektrischen Antriebs mitteilt oder für dieses anzeigt. So wird das weitere Steuergerät erfindungsgemäß in die Lage versetzt, anhand der Angebotsnachricht zu erkennen, dass auch ein Bremsmoment mit dem elektrischen Antrieb bereitstellbar sein kann. Dem weiteren Steuergerät wird somit überhaupt erst ermöglicht den elektrischen Antrieb bevorzugt vor der Anforderung eines Bremsdrehmoments durch einem Retarder, das auch kurz Retarderbremsmoment genannt werden kann, anzufordern.

Die durch die Erfindung bereitgestellte mögliche bevorzugte Ansteuerung des elektrischen Antriebs zum Bereitstellen einer Dauerbremsfunktionalität in Form eines Bremsdrehmoments vor der Ansteuerung eines Retarders führt somit zu einem häufigeren Einsatz des elektrischen Antriebs im Rekuperationsbetrieb und somit zur Erhöhung der Häufigkeit der Situationen, in denen elektrische Energie zurückgewonnen wird.

Gleichzeitig ist dadurch, dass die Angebotsnachricht immer in Abhängigkeit von der Statusnachricht erzeugt wird, dem weiteren Steuergerät auch immer das aktuell zur Verfügung stehende Bremsmoment des elektrischen Antriebs bekannt. So kann im Falle eines geringen oder nicht zur Verfügung stehenden Bremsmoments durch den elektrischen Antrieb weiterhin ein sicheres Bremsen ermöglicht werden, da das weitere Steuergerät auch dann entsprechend in die Lage versetzt wird, wie bislang üblich, zunächst den Retarder und gegebenenfalls weiter auch die Reibbremsen über das Bremssteuergerät anzusteuern.

Gemäß einer ersten Ausführungsform wird die Statusnachricht über einen ersten Bus, der mit dem Steuergerät verbunden ist, empfangen. Der erste Bus ist vorzugsweise ein ISO 11992-2 Bus. Das Steuergerät ist vorzugsweise ein Bremssteuergerät. Die Angebotsnachricht wird gemäß dieser Ausführungsform auf einem zweiten Bus ausgesendet, der ebenfalls mit dem Steuergerät verbunden ist. Der zweite Bus ist unterschiedlich zum ersten Bus, also ein anderer Bus. Der zweite Bus ist vorzugsweise ein Zugfahrzeugbus, mit dem insbesondere ein SAE J1939-Protokoll übertragen wird. Demnach ist die Angebotsnachricht eine SAE J1939-Nachricht.

In vorteilhafter Weise werden so mit dem Steuergerät, insbesondere Bremssteuergerät, Informationen auf dem zweiten Bus, der vorzugsweise neben dem Steuergerät mit dem weiteren Steuergerät verbunden ist, bereitgestellt, die bislang nur auf dem ersten Bus bereitgestellt waren. So wird das weitere Steuergerät, insbesondere durch Verwendung bereits bei üblichen Fahrzeugkonfigurationen vorhandenen Bussystemen, in einfacher Weise in die Lage versetzt, auf diese Informationen des elektrischen Antriebs zu reagieren, also bei Bedarf priorisiert einen Rekuperationsbetrieb einzuleiten.

Gemäß einer weiteren Ausführungsform umfasst das Verfahren die folgenden weiteren Schritte, die mit dem Steuergerät, vorzugsweise dem Bremssteuergerät, ausgeführt werden. Zunächst wird eine Anforderungsnachricht von dem weiteren Steuergerät empfangen, mit der ein Bremsmoment, das im Folgenden zur Unterscheidung auch angefordertes Bremsmoment genannt wird, angefordert wird. Die Anforderungsnachricht enthält somit einen Wert eines Drehmoments, der einem angeforderten Bremsmoment entspricht oder es ist ein Wert eines Drehmoments für ein angefordertes Bremsmoment aus der Anforderungsnachricht ableitbar. Weiter wird eine Ansteuernachricht zum Ansteuern des elektrischen Antriebs erzeugt, um durch die Ansteuerung ein Bremsmoment mit dem elektrischen Antrieb zu erzeugen. Hierbei wird die Ansteuernachricht in Abhängigkeit von der Anforderungsnachricht erzeugt. Das mit dem elektrischen Antrieb zu erzeugende Bremsmoment ist also abhängig von dem mit der Anforderungsnachricht angeforderten Bremsmoment oder entspricht diesem vorzugsweise. Zuletzt wird die Ansteuernachricht an den elektrischen Antrieb ausgesendet. Das Aussenden der Ansteuernachricht umfasst entweder das direkt aussenden der Ansteuernachricht an den elektrischen Antrieb oder das indirekte Aussenden über ein Steuergerät, wie ein weiteres Bremssteuergerät oder ein Anhängerbremssteuergerät, an den elektrischen Antrieb.

In einfacher Weise kann so mit dem weiteren Steuergerät, beispielsweise mit dem Fahrerassistenzsystem, ein Bremsmoment mit der Anforderungsnachricht angefordert werden, die dann mit dem Steuergerät, vorzugsweise dem Bremssteuergerät, empfangen und in ein Ansteuersignal für den elektrischen Antrieb umgewandelt oder in dieses überführt wird, um ein Bremsmoment mit dem elektrischen Antrieb zu erzeugen. Das weitere Steuergerät, beispielsweise des Fahrerassistenzsystems, kann also ein Bremsmoment durch den elektrischen Antrieb abrufen, ohne dass dieses direkt mit dem elektrischen Antrieb verbunden sein muss. Dieses Abrufen mit einer Anforderungsnachricht ist besonders einfach realisierbar, da eine vergleichbare Anforderungsnachricht bereits in bekannten weiteren Steuergeräten, beispielsweise von Fahrerassistenzsystemen, für die übliche Ansteuerung eines Retarders implementiert sind. Das Abrufen eines Bremsmoments mit dem elektrischen Antrieb lässt sich demnach in gleicher, einfacher Weise wie ein Retarder ansteuern.

Gemäß einer weiteren Ausführungsform wird mit dem Steuergerät im Falle einer Auslösung eines Sicherheitssystems, die vom Steuergerät detektiert wird, eine Angebotsnachricht erzeugt und ausgesendet, die ein angebotenes Bremsmoment anzeigt, das einem Nullwert entspricht. Beispiele für derartige Sicherheitssystems umfassen insbesondere alle oder einige Funktionen einer Fahrdynamikregelung (ESP oder ESC), wie beispielsweise ein Antiblockiersystem (ABS), ein elektronisches Bremssystem (EBS) oder eine Rollstabilitätskontrolle (RSC).

Es wird also kein Bremsmoment vom elektrischen Antrieb abgerufen, auch wenn die Statusnachricht anzeigt, dass ein Bremsmoment bereitstellbar ist. Weiter wird dem weiteren Steuergerät signalisiert, dass der elektrische Antrieb zurzeit nicht für ein Bremsmoment zur Verfügung steht, sodass das weitere Steuergerät ein dennoch benötigtes Bremsmoment beispielweise vom Retarder anfordern kann. Das weitere Steuergerät kann jedenfalls darauf reagieren, dass der elektrische Antrieb bei Auslösung eines Sicherheitssystems nicht zur Verfügung steht.

Alternativ oder zusätzlich wird im Falle einer detektierten Auslösung eines Sicherheitssystems eine Ansteuernachricht vom Steuergerät, insbesondere dem Bremssteuergerät, erzeugt, um den elektrischen Antrieb anzusteuern, unabhängig von der Anforderungsnachricht, kein Bremsmoment zu erzeugen.

Im Falle der Auslösung eines Sicherheitssystems ist dieses priorisiert zu bewerten und es wird gemäß dieser Ausführungsform sichergestellt, dass ein Bremsen durch den elektrischen Antrieb nicht die Funktion des Sicherheitssystems beeinträchtigt.

Gemäß einer weiteren Ausführungsform wird mit dem weiteren Steuergerät ein gewünschtes Betriebsbremsmoment empfangen oder generiert. Das gewünschte Bremsmoment wird also beispielsweise, wenn das weitere Steuergerät das Steuergerät eines Fahrerassistenzsystems ist, von dem Fahrerassistenzsystem selbst erzeugt, beispielsweise, wenn ein Abstand zu einem vorausfahrenden Fahrzeug unterschritten wird. Alternativ ist es auch möglich, dass das weitere Steuergerät ein gewünschtes Betriebsbremsmoment von einem weiteren System, insbesondere einem weiteren Fahrerassistenzsystem, des Fahrzeugs empfängt.

In Abhängigkeit von diesem gewünschten Betriebsbremsmoment werden dann folgende Schritte vom weiteren Steuergerät ausgeführt.

Im Falle, dass das gewünschte Betriebsbremsmoment kleiner oder gleich dem mit der Angebotsnachricht angebotenen Bremsmoment ist, wird eine Anforderungsnachricht vom weiteren Steuergerät erzeugt und ausgesendet, das dem empfangenen gewünschten Betriebsbremsmoment entspricht. Dies gilt insbesondere für den Fall, dass das Nutzfahrzeug einen Retarder aufweist und auf für den Fall, dass das Nutzfahrzeug keinen Retarder aufweist.

Solange also das gewünschte Betriebsbremsmoment allein durch den elektrischen Antrieb erfüllt werden kann, wird ein entsprechendes Bremsmoment mittels Anforderungsnachricht und Ansteuernachricht vom elektrischen Antrieb angefordert.

Demgegenüber wird in dem Falle, dass das gewünschte Betriebsbremsmoment größer als das über die Angebotsnachricht angebotene Bremsmoment ist, vom Steuergerät eine Anforderungsnachricht erzeugt, die dem angebotenen Bremsmoment entspricht. Es wird also das maximal angebotene Bremsmoment des elektrischen Antriebs angefordert. Weiter erzeugt und sendet das weitere Steuergerät in diesem Fall eine weitere Nachricht an das Bremssteuergerät, mit dem ein zusätzliches Bremsmoment angefordert wird, insbesondere, um die Reibbremsen anzusteuern. Die weitere Nachricht umfasst hier die Anforderung eines weiteren Bremsmoments, das der Differenz aus gewünschtem Betriebsbremsmoment und angebotenem Bremsmoment entspricht. Dieser Fall gilt insbesondere für den Fall, dass das Nutzfahrzeug nicht über einen Retarder verfügt.

Es wird also in diesem zuletzt genannten Fall zunächst das maximal angebotene Bremsmoment, über den elektrischen Antrieb angefordert und zusätzlich von dem Bremssteuergerät ein Bremsmoment, das durch die Reibbremse realisiert werden soll, angefordert, um das gesamte gewünschten Betriebsbremsmoment zu erfüllen.

Für den weiteren zu unterscheidenden Fall, dass das Zugfahrzeug über einen Retarder verfügt und das gewünschte Betriebsbremsmoment größer als das über die Angebotsnachricht angebotene Bremsmoment ist, wird eine Anforderungsnachricht vom weiteren Steuergerät erzeugt und ausgesendet, die dem angebotenen Bremsmoment entspricht. Weiter wird dann zwischen den zwei weiteren Fällen unterschieden.

Im Falle, dass nämlich die Differenz aus gewünschtem Betriebsbremsmoment und angebotenem Bremsmoment kleiner oder gleich einem durch den Retarder bereitstellbaren Retarderbremsmoment ist, wird lediglich zusätzlich zu der Anforderungsnachricht eine weitere Nachricht vom weiteren Steuergerät an den Retarder gesendet, mit der ein Retarderbremsmoment vom Retarder angefordert wird, das der Differenz entspricht.

Im alternativen Fall, dass die Differenz aus gewünschtem Betriebsbremsmoment und angebotenem Bremsmoment größer als ein durch den Retarder bereitstellbares Retarderbremsmoment ist, wird zusätzlich zur Anforderungsnachricht eine erste weitere Nachricht an den Retarder vom weiteren Steuergerät gesendet, mit der ein Retarderbremsmoment vom Retarder angefordert wird, das dem bereitstellbaren Retarderbremsmoment entspricht. Außerdem erzeugt das weitere Steuergerät eine zweite weitere Nachricht an das Bremssteuergerät und sendet diese an das Bremssteuergerät, mit dem ein zusätzliches Bremsmoment, insbesondere durch die Reibbremsen vom Bremssteuergerät angefordert wird, das einer weiteren Differenz aus gewünschtem Betriebsbremsmoment und dem summierten angebotenen Bremsmoment und dem maximal durch den Retarder bereitstellbaren Retarderbremsmoment entspricht.

Zusammengefasst steuert also das weitere Steuergerät über die Angebotsnachricht zunächst den elektrischen Antrieb an. Ist das Bremsmoment des elektrischen Antriebs ausreichend, um das gewünschten Betriebsbremsmoment zu erfüllen, so bleibt es bei dieser Ansteuerung. Kann jedoch das gewünschte Betriebsbremsmoment nicht allein durch den elektrischen Antrieb erfüllt werden, so wird ein zusätzliches Bremsmoment über das Bremssteuergerät und die Reibbremsen angefordert, insbesondere, wenn das Nutzfahrzeug nicht über einen Retarder verfügt.

Im Falle, dass das Nutzfahrzeug jedoch über einen Retarder verfügt und das gewünschte Betriebsbremsmoment nicht allein mit dem elektrischen Antrieb aufgebracht werden kann, wird zunächst der Retarder des Zugfahrzeugs verwendet und ein Bremsmoment mit dem Retarder, das auch Retarderbremsmoment genannt werden kann, erzeugt. Können der Retarder und der elektrische Antrieb zusammen nicht das gewünschte Betriebsbremsmoment erfüllen oder realisieren, so wird dann zusätzlich zum elektrischen Antrieb und dem Retarder vom weiteren Steuergerät ein Bremsmoment über das Bremssteuergerät von den Reibbremsen angefordert.

In dieser Kette von angeforderten Bremsmomenten im Betriebsbremsfalls, also während einer normalen Bremsung während der Fahrt, beispielsweise einer Anpassungsbremsung, wird hierbei immer priorisiert der elektrische Antrieb eingesetzt, sodass im Wesentlichen bei jeder Bremssituation elektrische Energie erzeugt wird. Eine besonders effiziente Ausnutzung des elektrischen Antriebs beim Bremsen des Nutzfahrzeugs ist so möglich.

Gemäß einer weiteren Ausführungsform sendet das weitere Steuergerät im Falle eines vom weiteren Steuergerät empfangenen oder generierten gewünschten Notbremsmoments, also in einem Notbremsfall, insbesondere durch Auslösung einer Notbremsung, keine Anforderungsnachricht oder eine Anforderungsnachricht mit einem Bremsmoment aus, das einem Nullwert entspricht. Das gewünschte Notbremsmoment wird demgegenüber vorzugsweise direkt mit einer weiteren Nachricht an das Bremssteuergerät von mindestens einer Reibbremse des Zugfahrzeugs und/oder des Gespanns angefordert.

Demnach wird also im Falle einer gewünschten Notbremsung vom weiteren Steuergerät dafür Sorge getragen, dass instantan, also möglichst ohne unvermeidbare Verzögerung, ein Notbremsmoment erzeugt werden muss, und zur Erfüllung dieser Voraussetzung nur die Reibbremsen der Betriebsbremse eingesetzt werden. Hierbei ist berücksichtig, dass insbesondere durch eine Kommunikation mit und Reaktion durch den elektrischen Antrieb vergleichsweise höhere Reaktionszeiten bei einer Bremsung mit dem elektrischen Antrieb als mit den Reibbremsen zu erwarten sind.

Gemäß einer weiteren Ausführungsform ist der elektrische Antrieb Bestandteil eines Anhängerfahrzeugs. Das Verfahren umfasst dann das Empfangen der Statusnachricht und das Aussenden der Ansteuernachricht über eine Busverbindung, insbesondere den ersten Bus. Die Busverbindung, nämlich insbesondere der erste Bus, ist hierbei zwischen dem Nutzfahrzeug und dem Anhängerfahrzeug ausgebildet.

Insbesondere wird gemäß dieser Ausführungsform die Statusnachricht von einem Anhängerbremssteuergerät mit dem als Bremssteuergerät ausgebildeten Steuergerät empfangen und die Ansteuernachricht mit dem Anhängerbremssteuergerät vom Bremssteuergerät empfangen. Der elektrische Antrieb wird bevorzugt in Abhängigkeit von der Ansteuernachricht mit dem Anhängerbremssteuergerät angesteuert.

In vorteilhafter Weise wird so, wenn der elektrische Antrieb Bestandteil eines Anhängerfahrzeugs ist, der elektrische Antrieb mit dem Anhängerbremssteuergerät angesteuert. Auch der Status des elektrischen Antriebs, den das Anhängerbremssteuergerät vom elektrischen Antrieb empfängt, wird über das Anhängerbremssteuergerät an das Bremssteuergerät des als Zugfahrzeug ausgebildeten Nutzfahrzeugs übertragen.

Zwischen Bremssteuergerät und Anhängersteuergerät eines Gespanns aus Zugfahrzeug und Anhängerfahrzeug besteht gemäß dem Stand der Technik eine Datenverbindung in Form eines ISO11992-Busses. Erfindungsgemäß wird diese Datenverbindung direkt genutzt, um den elektrischen Antrieb vom Zugfahrzeug aus zu steuern bzw. den Status für das Zugfahrzeug bereitzustellen.

Ferner betrifft die Erfindung ein Bremssteuergerät, das eingerichtet ist, das Verfahren nach einer der vorgenannten Ausführungsformen auszuführen.

Hierbei umfasst das Bremssteuergerät gemäß einer ersten Ausführungsform eine erste Schnittstelle zum Verbinden mit einem ersten Bus, der insbesondere mit einem elektrischen Antrieb oder einem Anhängerbremssteuergerät verbindbar ist. Die erste Schnittstelle dient zum Empfangen einer Statusnachricht von dem elektrischen Antrieb. Demnach ist die Statusnachricht direkt vom elektrischen Antrieb empfangbar oder über das Anhängerbremssteuergerät, das vorzugsweise die Statusnachricht vom elektrischen Antrieb empfängt, empfangbar. Die Statusnachricht zeigt an, dass mit dem elektrischen Antrieb ein Bremsmoment bereitstellbar ist.

Weiter umfasst das Bremssteuergerät eine Rechnereinheit zum Erzeugen einer Angebotsnachricht, die ein angebotenes Bremsmoment anzeigt, wobei die Angebotsnachricht in Abhängigkeit von der Statusnachricht erzeugt wird.

Außerdem umfasst das Bremssteuergerät eine zweite Schnittstelle zum Verbinden mit einem zweiten Bus, der insbesondere mit einem weiteren Steuergerät, insbesondere eines Fahrerassistenzsystems, verbindbar ist. Die zweite Schnittstelle dient zum Aussenden der Angebotsnachricht an das mindestens eine weitere Steuergerät.

Außerdem umfasst die Erfindung ein Bremssystem mit dem zuvor genannten Bremssteuergerät und einem weiteren Steuergerät, insbesondere eines Fahrerassistenzsystems zum Ausführen eines Verfahrens nach einer der vorgenannten Ausführungsformen. Das Bremssystem ist eingerichtet, eine Anforderungsnachricht von dem weiteren Steuergerät auszusenden und mit dem Bremssteuergerät über die zweite Schnittstelle zu empfangen.

Gemäß einer Ausführungsform des Bremssystems umfasst das Bremssystem ein Anhängerbremssteuergerät und vorzugsweise einen elektrischen Antrieb. Das Anhängerbremssteuergerät ist eingerichtet, eine Statusnachricht von dem elektrischen Antrieb eines Anhängerfahrzeugs zu empfangen und an das Bremssteuergerät auszusenden. Weiter ist das Anhängerbremssteuergerät eingerichtet, eine Ansteuernachricht vom Bremssteuergerät zu empfangen und an den elektrischen Antrieb weiterzuleiten oder den elektrischen Antrieb in Abhängigkeit von der Ansteuernachricht anzusteuern.

Gemäß einer weiteren Ausführungsform des Bremssystems ist das Bremssteuergerät mit dem weiteren Steuergerät über einen zweiten Bus, insbesondere einen Zugfahrzeugbus, verbunden. Der zweite Bus ist eingerichtet Nachrichten mit dem SAE J1939 Protokoll zu übertragen.

Gemäß einer weiteren Ausführungsform des Bremssystems ist das Bremssteuergerät mit dem Anhängerbremssteuergerät über einen ersten Bus verbunden, der insbesondere ein ISO 11992-2-Bus mit einer ISO 7638-Schnittsstelle ist.

Weiterhin umfasst die Erfindung ein Nutzfahrzeug mit einem Bremssteuergerät nach einer der vorgenannten Ausführungsformen oder einem Bremssystem nach einer der vorgenannten Ausführungsformen, wobei das Nutzfahrzeug ferner vorzugsweise einen Retarder aufweist.

Weiterhin umfasst die Erfindung ein Gespann mit dem zuvor genannten erfindungsgemäßen Nutzfahrzeug und einem Anhängerfahrzeug.

Außerdem umfasst die Erfindung ein Computerprogrammprodukt, das Instruktionen umfasst, die, wenn sie auf mindestens einer Rechnereinheit oder einem Bremssteuergerät, insbesondere nach einer der vorgenannten Ausführungsformen, ausgeführt werden, die Rechnereinheit bzw. das Bremssteuergerät veranlassen, die Schritte des Verfahrens nach einer der vorgenannten Ausführungsformen auszuführen. Alternativ oder zusätzlich umfasst das Computerprogramm Instruktionen, die, wenn sie auf einem Bremssteuergerät und einem weiteren Steuergerät eines Bremssystems nach einer der vorgenannten Ausführungsformen ausgeführt werden, die Schritte des Verfahrens nach einer der vorgenannten Ausführungsformen ausführen.

Weitere Ausführungsformen ergeben sich anhand der in den Figuren gezeigten Ausführungsbeispielen. Hierbei zeigen
- Fig. 1: ein Gespann aus einem Zugfahrzeug und einem Anhängerfahrzeug und
- Fig. 2: die Schritte des Verfahrens gemäß einem Ausführungsbeispiel.

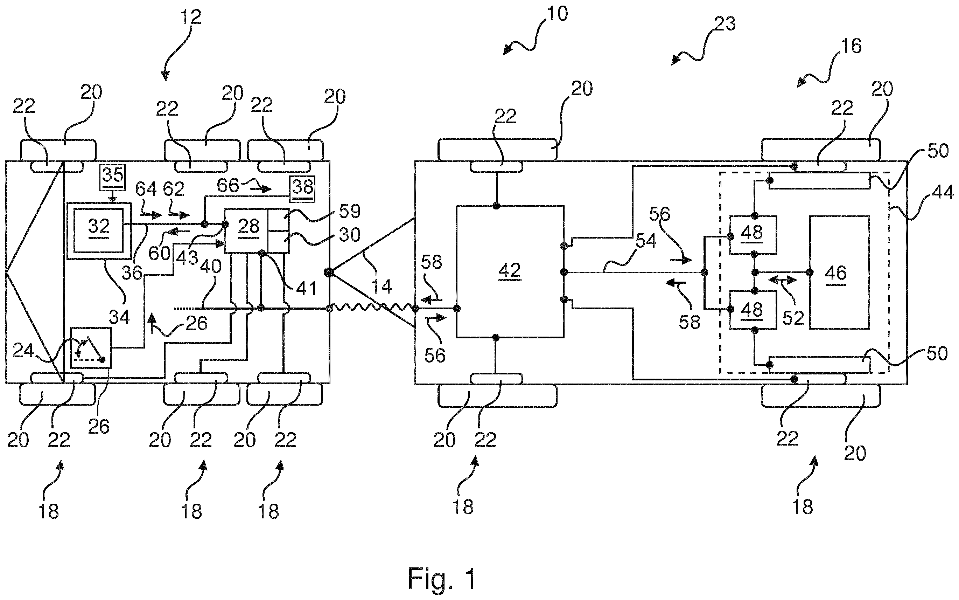

Fig. 1 zeigt ein Gespann 10, das ein Nutzfahrzeug 12 aufweist. Das Nutzfahrzeug 12 ist hier ein Zugfahrzeug 12, da es über eine Deichsel 14 mit einem Anhängerfahrzeug 16 verbunden ist. Das Anhängerfahrzeug 16 ist somit durch das Zugfahrzeug 12 ziehbar.

Das Zugfahrzeug 12 sowie das Anhängerfahrzeug 16 umfassen jeweils mehrere Achsen 18, die jeweils zwei Räder 20 aufweisen. Mindestens eine der Achsen 20 ist durch einen Verbrennungsmotor oder einen elektrischen Antrieb angetrieben, wobei weder ein Verbrennungsmotor noch ein elektrischer Antrieb des Zugfahrzeugs 12 zur besseren Übersicht in Fig. 1 dargestellt ist. Weiterhin ist jedes der Räder 20 mit einer Reibbremse 22 zur radindividuellen Bremsung der Räder 20 ausgebildet. Weiterhin umfasst das Gespann 10 ein Bremssystem 23.Zum Bremsen, also zum Verlangsamen des Fahrzeugs, was auch Verzögern genannt wird, weist das Nutzfahrzeug 12 ein Bremspedal 24 auf, mit dem durch Variation einer Stellung des Bremspedals 24 ein Bediener des Zugfahrzeugs 12 einen Bremswunsch 26 an ein Steuergerät 28 eines elektronischen Bremssystems (EBS) signalisiert. Das Steuergerät 28 ist hier ein Bremssteuergerät 28, das mindestens ein Sicherheitssystem 30, das hier eine Fahrdynamikregelung 30 ist, umfasst. Das Bremspedal 24 ist über eine Signalleitung mit dem Bremssteuergerät 28 verbunden. In Abhängigkeit von dem Bremswunsch dient das Bremssteuergerät 28 zum Ansteuern der Reibbremsen 22, die an den einzelnen Rädern 20 angeordnet sind.

Weiter sind das Bremssteuergerät 28 und ein weiteres Steuergerät 32 eines Fahrerassistenzsystems 34 verbunden. Die Verbindung ist durch einen Zugfahrzeugbus 36 ausgebildet, über den Nachrichten mit einem SAE J1939-Protokoll zwischen dem weiteren Steuergerät 32 und dem Bremssteuergerät 28 ausgetauscht werden können. Beispielsweise kann das weitere Steuergerät 32, im Falle, dass das Fahrerassistenzsystem eine Abstandsregelautomatik ist oder umfasst, das Bremssteuergerät 28 veranlassen, zur Verzögerung die Reibbremsen 22 zu aktivieren. Hierzu generierte das weitere Steuergerät 32 ein Betriebsbremsmoment. Es kann auch vorgesehen sein, dass das weitere Steuergerät 32 mit weiteren Fahrerassistenzsystemen 35 verbunden ist und ein Betriebsbremsmoment von diesen empfängt weiteren Fahrerassistenzsystemen 35 und das Bremssteuergerät 28 weiterleitet.

Der Zugfahrzeugbus 36 ist weiterhin mit einem Retarder 38 verbunden, der vom weiteren Steuergerät 32 ebenfalls angesteuert werden kann, um eine Dauerbremswirkung zu erzeugen, falls diese vom Fahrerassistenzsystem 34 gewünscht wird. So können die Reibbremsen 22 entlastet werden.

Außerdem ist das Bremssteuergerät mit einem ISO 11992-2-Bus 40 verbunden, der weiter mit einem Anhängerbremssteuergerät 42 verbunden ist. Das Anhängerbremssteuergerät 42 ist Bestandteil des Anhängerfahrzeugs 16 und dient zum Ansteuern von Reibbremsen 22 des Anhängerfahrzeugs 16. Der ISO 11992-2-Bus 40 entspricht hier einem erster Bus 40, an den das Bremssteuergerät 28 mit einer ersten Schnittstelle 41 angebunden ist. Dementsprechend entspricht der Zugfahrzeugbus 36 einem zweiten Bus 36, an den das Bremssteuergerät 28 über eine zweite Schnittstelle 43 angebunden ist.

Weiterhin dient das Anhängerbremssteuergerät 42 zum Ansteuern eines elektrischen Antriebs 44 des Anhängerfahrzeugs 16. Der elektrische Antrieb 44 umfasst einen Energiespeicher 46, der wiederaufladbar ist und auch als Akkumulator bezeichnet werden kann. Neben dem Energiespeicher 46 umfasst der elektrische Antrieb 44 zwei Umrichter 48, die mit der Energie des Energiespeichers 46 elektrische Motoren 50 versorgen, um ein positives Drehmoment zu erzeugen. Die elektrischen Motoren 50 können auch im Generatorbetrieb oder generatorisch betrieben werden, sodass elektrische Energie 52 über die Umrichter 48 zurück in den Energiespeicher 46 gespeist wird. Gemäß einem weiteren hier nicht dargestellten Ausführungsbeispiel umfasst der elektrische Antrieb 44 nur einen elektrischen Motor 50, der mittels Differentialgetriebe zwei Räder antreibt. Auch bei einem solchen Ausführungsbeispiel kann der Motor generatorisch betrieben werden, um elektrische Energie 52 über einen Umrichter 48 in den Energiespeicher 46 zu speisen.

Der elektrische Antrieb 44 ist mit dem Anhängerbremssteuergerät 42 über einen Bus 54 verbunden, um einerseits eine Ansteuernachricht 56 vom Anhängerbremssteuergerät 42 zu empfangen und eine Statusnachricht 58 an das Anhängerbremssteuergerät 42 zu senden. Über die Ansteuernachricht 56 kann das Anhängerbremssteuergerät den elektrischen Antrieb 44, insbesondere die Umrichter 48 so ansteuern, dass die elektrischen Motoren 52 im Generatorbetrieb betrieben werden und ein Bremsmoment erzeugen.

Zum Ausführen des Verfahrens umfasst das Bremssteuergerät 28 zusätzlich eine Rechnereinheit 59. Das Bremssteuergerät ist erfindungsgemäß eingerichtet, eine Statusnachricht 58 vom elektrischen Antrieb 44 über das Anhängerbremssteuergerät 42 über den Status des elektrischen Antriebs, insbesondere die Ladung des Energiespeichers 46 oder die Drehzahl der elektrischen Motoren 50, zu erhalten und auf dem zweiten Bus 36, eine Angebotsnachricht 60 für ein angebotenes Bremsmoment in Abhängigkeit der Statusnachricht 58 bereitzustellen. Das weitere Steuergerät 32 kann dann eine Anforderungsnachricht 62 für ein angefordertes Bremsmoment an das Bremssteuergerät 28 senden, mit dem dieses ein Bremsmoment anfordert. In Abhängigkeit dieser Anforderungsnachricht 62 erzeugt dann das Bremssteuergerät eine Ansteuernachricht 56. Weiter kann das weitere Steuergerät 32 weitere Nachrichten 64, 66 zum Ansteuern der Reibbremsen 22 über das Bremssteuergerät und zum Ansteuern eines Retarders 38 aussenden.

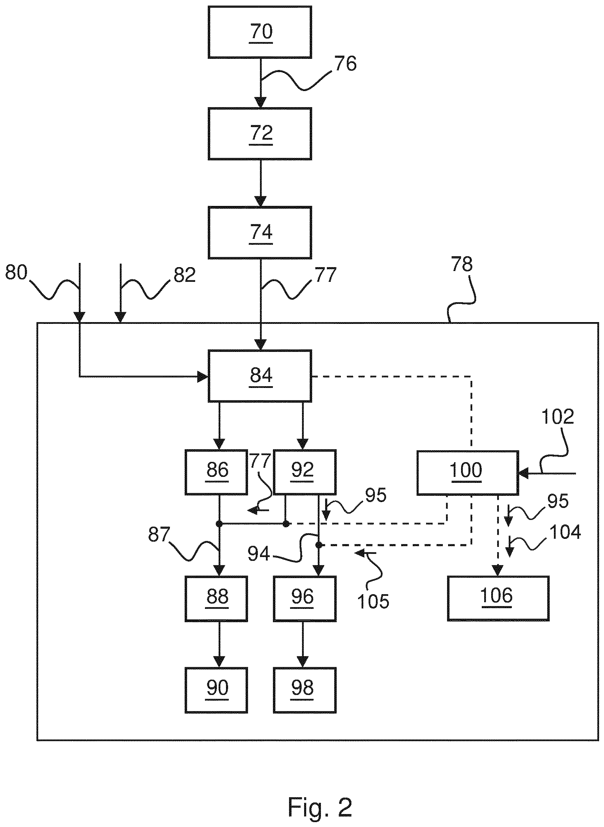

Die Schritte des Verfahrens sind in Fig. 2 gemäß einem Ausführungsbeispiel im Detail dargestellt. In einem Schritt 70 wird eine Statusnachricht 58 von einem elektrischen Antrieb 44 entweder direkt oder über ein Anhängerbremssteuergerät 42 mit einem Bremssteuergerät 28 empfangen. Die Statusnachricht zeigt eine bereitstellbares Bremsmoment 76 an. In einem Schritt 72 wird aus der Statusnachricht 58 eine Angebotsnachricht 60 erzeugt. In einem Schritt 74 wird die Angebotsnachricht 60, die ein angebotenes Bremsmoment 77 anzeigt, ausgesendet.

In einem Schritt 78 wird die Angebotsnachricht 60 von einem weiteren Steuergerät 32 empfangen und mit dem weiteren Steuergerät 32 zumindest eine Anforderungsnachricht 64 in Abhängigkeit von der Angebotsnachricht 60 und in Abhängigkeit von einem empfangenen oder erzeugten gewünschten Betriebsbremsmoment 80 oder in Abhängigkeit von einem empfangenen oder erzeugten Notbremsmoment 82 erzeugt.

Hierzu wird im Schritt 78, wenn ein gewünschtes Betriebsbremsmoment 80 und kein gewünschtes Notbremsmoment 82 empfangen wird, in einem Schritt 84 geprüft, ob das gewünschte Betriebsbremsmoment 80 kleiner, gleich oder größer als das angebotene Bremsmoment 77 ist. Im Falle, dass das gewünschte Betriebsbremsmoment 80 kleiner als oder gleich dem angebotenen Bremsmoment 77 ist, wird in einem Schritt 86 eine Anforderungsnachricht 62 erzeugt, die ein angefordertes Bremsmoment 87 umfasst, das dem gewünschten Betriebsbremsmoment 80 entspricht. Im Schritt 88 wird die Anforderungsnachricht 62 vom Bremssteuergerät 28 empfangen und in einem Schritt 90 der elektrische Antrieb 44 mit diesem angeforderten Bremsmoment 87 in Form einer Ansteuernachricht 56 angesteuert.

Ist das gewünschte Betriebsbremsmoment 80 hingegen größer als das angebotene Bremsmoment, wird im Schritt 92 eine Anforderungsnachricht 62 vom weiteren Steuergerät 32 erzeugt und ausgesendet, die ein angefordertes Bremsmoment 87 umfasst, dass dem angebotenen Bremsmoment 77 entspricht. Folglich werden wiederum die Schritte 88 und 90 ausgeführt.

Gleichzeitig wird im Schritt 92 eine weitere Nachricht 64 erzeugt und ebenfalls an das Bremssteuergerät 28 gesendet, um ein zusätzliches Bremsmoment 94, das auch als Reibbremsmoment 94 bezeichnet werden kann, zu erzeugen. Das zusätzliche Bremsmoment 94 entspricht einer Differenz 95 aus gewünschtem Betriebsbremsmoment 80 und angebotenem Bremsmoment 77. Das angeforderte Reibbremsmoment 94 wird vom Bremssteuergerät 28 im Schritt 96 empfangen und im Schritt 98 die Reibbremsen 22 vom Bremssteuergerät 28 entsprechend angesteuert.

Weiterhin ist in Fig. 2 auch der optionale Fall dargestellt, dass das Zugfahrzeug 12 zusätzlich einen Retarder 38 aufweist. Tritt der Fall ein, dass das gewünschte Betriebsbremsmoment 80 größer als das angebotene Bremsmoment 77 ist und ist ein Retarder 38 im Zugfahrzeug 12 vorhanden, so wird in einem Schritt 100 mit dem weiteren Steuergerät 32, analog zum Schritt 92, eine Anforderungsnachricht 62 vom weiteren Steuergerät 32 erzeugt und ausgesendet, die ein angefordertes Bremsmoment 87 umfasst, dass dem angebotenen Bremsmoment 76 entspricht. Folglich werden wiederum die Schritte 88 und 90 ausgeführt.

Gleichzeitig wird dann jedoch weiter im Schritt 100 geprüft, ob das angeforderte Bremsmoment 87 allein das gewünschte Betriebsbremsmoment 80 erfüllen kann. Ist dies nicht der Fall wird die Differenz 95 zwischen Betriebsbremsmoment 80 und Bremsmoment 87 gebildet. Weiter wird im Schritt 100 geprüft, ob die Differenz 95 kleiner oder gleich einem durch den Retarder 38 bereitstellbaren Retarderbremsmoment 102 ist. Ist dies der Fall wird ein Retarderbremsmoment 104 mit einer weiteren Nachricht 66 ausgesendet, dass der Differenz 95 entspricht und in einem Schritt 106 der Retarder 38 mit dem angeforderten Retarderbremsmoment 104 angesteuert.

Ist die Differenz 95 jedoch größer als das von dem Retarder 38 bereitstellbaren Retarderbremsmoment 102, so wird ein Retarderbremsmoment 104, das dem bereitstellbaren Retarderbremsmoment 102 entspricht, mit einer weiteren Nachricht 66 angefordert und in einem Schritt 106 der Retarder 38 mit dem angeforderten Retarderbremsmoment 104 angesteuert. Zusätzlich wird analog zum Schritt 92 eine weitere Nachricht 64 erzeugt und an das Bremssteuergerät 28 gesendet, um ein zusätzliches Bremsmoment mit den Reibbremsen 22 anzufordern, um so das gewünscht Betriebsbremsmoment 80 bereitzustellen. Dieses zusätzliche Bremsmoment entspricht einer weiteren Differenz 105 aus gewünschtem Betriebsbremsmoment 80 und dem mit dem angebotenen Bremsmoment 77 summierten bereitstellbaren Retarderbremsmoment 102.

Im Falle eines Notbremsmoments 82, das vom weiteren Steuergerät 32 empfangen oder erzeugt wird, wird eine Anforderungsnachricht 62 erzeugt, die kein Bremsmoment anfordert, da direkt die Reibbremse betätigt wird

### Bezugszeichenliste (Bestandteil der Beschreibung)

- 10: Gespann
- 12: Nutzfahrzeug/Zugfahrzeug
- 14: Deichsel
- 16: Anhängerfahrzeug
- 18: Achse
- 20: Räder
- 22: Reibbremse
- 23: Bremssystem
- 24: Bremspedal
- 26: Bremswunsch
- 28: Steuergerät/Bremssteuergerät
- 30: Sicherheitssystem/Fahrdynamikregelung
- 32: weiteres Steuergerät
- 34: Fahrerassistenzsystem
- 35: weitere Fahrerassistenzsysteme
- 36: Zugfahrzeugbus/zweiter Bus
- 38: Retarder
- 40: ISO 11992-2-Bus/erster Bus
- 41: erste Schnittstelle
- 42: Anhängerbremssteuergerät
- 43: zweite Schnittstelle
- 44: elektrischer Antrieb
- 46: Energiespeicher
- 48: Umrichter
- 50: elektrische Motoren
- 52: elektrische Energie
- 54: Bus
- 56: Ansteuernachricht
- 58: Statusnachricht
- 59: Rechnereinheit
- 60: Angebotsnachricht
- 62: Anforderungsnachricht
- 64: weitere Nachricht
- 66: weitere Nachricht
- 70 bis 74: Schritte des Verfahrens
- 76: bereitstellbares Bremsmoment
- 77: angebotenes Bremsmoment
- 78: Schritt des Verfahrens
- 80: Betriebsbremsmoment
- 82: Notbremsmoment
- 84 und 86: Schritte des Verfahrens
- 87: angefordertes Bremsmoment
- 88 bis 92: Schritte des Verfahrens
- 94: zusätzliches Bremsmoment/angefordertes Reibbremsmoment
- 95: Differenz
- 96 und 98: Schritte des Verfahrens
- 100: Schritt des Verfahrens
- 102: bereitstellbares Retarderbremsmoment
- 104: Retarderbremsmoment
- 105: weitere Differenz
- 106: Schritt des Verfahrens

## Patentansprüche

1. Verfahren für ein Nutzfahrzeug (12), insbesondere ein Zugfahrzeug (12), oder ein Gespann (10) mit einem Nutzfahrzeug (12), umfassend die mit einem Steuergerät (28), vorzugsweise einem Bremssteuergerät (28), des Nutzfahrzeugs (12) ausgeführten Schritte:
- Empfangen (70) einer Statusnachricht (58) von einem elektrischen Antrieb (44) des Nutzfahrzeugs (12) und/oder eines vom Nutzfahrzeug (12) gezogenen Anhängerfahrzeugs (16), das anzeigt, dass von dem elektrischen Antrieb (44) ein bereitstellbares Bremsmoment (76) verfügbar ist,
- Erzeugen (72) einer Angebotsnachricht (60) mit einer Rechnereinheit (59), die ein angebotenes Bremsmoment (77) von dem elektrischen Antrieb (44) anzeigt, in Abhängigkeit von der Statusnachricht (58) und
- Aussenden (74) der Angebotsnachricht (60) an oder für mindestens ein weiteres Steuergerät (32) des Nutzfahrzeugs (12).

2. Verfahren nach Anspruch 1, wobei die Statusnachricht (58) über einen ersten mit dem Steuergerät (28) verbundenen Bus (40) empfangen und die Angebotsnachricht (60) auf einem zweiten mit dem Steuergerät (28) verbundenen Bus (40) ausgesendet wird, wobei die Angebotsnachricht (60) an oder für das weitere Steuergerät (32) ausgesendet wird.

3. Verfahren nach Anspruch 1 oder 2, wobei das Verfahren die weiteren mit dem Steuergerät (28) ausgeführten Schritte umfasst:
- Empfangen einer Anforderungsnachricht (62) von dem weiteren Steuergerät (32), mit der ein angefordertes Bremsmoment (87) angefordert wird,
- Erzeugen einer Ansteuernachricht (56) zum Ansteuern des elektrischen Antriebs (44), um das angeforderte Bremsmoment (87) mit dem elektrischen Antrieb (44) zu erzeugen, wobei das Erzeugen der Ansteuernachricht (56) in Abhängigkeit von der Anforderungsnachricht (62) erfolgt und
- Aussenden der Ansteuernachricht (56) an den elektrischen Antrieb (44).

4. Verfahren nach einem der vorhergehenden Ansprüche, wobei im Falle einer vom Steuergerät (28) detektierten Auslösung eines Sicherheitssystems (30)
- eine Angebotsnachricht (60) vom Steuergerät (28) erzeugt und ausgesendet wird, die ein angebotenes Bremsmoment (77) anzeigt, das einem Nullwert entspricht und/oder
- das Steuergerät (28) eine Ansteuernachricht (56) erzeugt und aussendet, um den elektrischen Antrieb (44) anzusteuern, unabhängig von einer empfangenen Anforderungsnachricht (62) ein angefordertes Bremsmoment (87) mit einem Nullwert zu erzeugen.

5. Verfahren nach einem der vorhergehenden Ansprüche, wobei das weitere Steuergerät (32) ein gewünschtes Betriebsbremsmoment (80) von einem weiteren Steuergerät (32) empfängt oder generiert, wobei das weitere Steuergerät (32)
a) im Falle, dass das gewünschte Betriebsbremsmoment (80) kleiner oder gleich dem mit der Angebotsnachricht (60) angebotenen Bremsmoment (77) ist, eine Anforderungsnachricht (62) erzeugt und aussendet, die dem gewünschten Betriebsbremsmoment (80) entspricht oder
b1) im Falle, dass das gewünschte Betriebsbremsmoment (80) größer als das mit der Angebotsnachricht (60) angebotene Bremsmoment (77) ist, eine Anforderungsnachricht (62) erzeugt und aussendet, die dem angebotenen Bremsmoment (77) entspricht, und das weitere Steuergerät (32) eine weitere Nachricht (64) erzeugt und an das Bremssteuergerät (28) sendet, mit dem ein zusätzliches Bremsmoment (94) angefordert wird, das einer Differenz (95) aus gewünschtem Betriebsbremsmoment (80) und angebotenem Bremsmoment (77) entspricht, oder
b2) im Falle, dass das gewünschte Betriebsbremsmoment (80) größer als das mit der Angebotsnachricht (60) angebotene Bremsmoment (77) ist und das Nutzfahrzeug (12) über einen Retarder (38) verfügt, eine Anforderungsnachricht (60) mit dem weiteren Steuergerät (32) erzeugt und aussendet, die dem angebotenen Bremsmoment (77) entspricht und
i) im Falle, dass die Differenz (95) aus gewünschtem Betriebsbremsmoment (80) und angebotenem Bremsmoment (77) kleiner oder gleich einem durch den Retarder (38) bereitstellbaren Retarderbremsmoment (102) ist, eine weitere Nachricht (66) vom weiteren Steuergerät (32) an den Retarder (38) gesendet wird, mit der ein Retarderbremsmoment (104) vom Retarder (38) angefordert wird, das der Differenz (95) entspricht oder
ii) im Falle, dass die Differenz (95) aus gewünschtem Betriebsbremsmoment (80) und angebotenem Bremsmoment (77) größer als ein durch den Retarder (38) bereitstellbares Retarderbremsmoment (102) ist, eine weitere Nachricht (66) vom weiteren Steuergerät (32) an den Retarder (38) gesendet wird, mit der ein Retarderbremsmoment (104) vom Retarder (38) angefordert wird, das dem bereitstellbaren Retarderbremsmoment (102) entspricht und eine weitere Nachricht (64) vom weiteren Steuergerät (32) an das Bremssteuergerät (28) gesendet wird, mit dem ein zusätzliches Bremsmoment (94) angefordert wird, das einer weiteren Differenz (105) aus gewünschtem Betriebsbremsmoment (80) und dem mit dem angebotenen Bremsmoment (77) summierten bereitstellbaren Retarderbremsmoment (102) entspricht.

6. Verfahren nach einem der vorhergehenden Ansprüche, wobei das weitere Steuergerät (32) im Falle eines vom weiteren Steuergerät (32) empfangenen oder generierten gewünschten Notbremsmoments (82) keine Anforderungsnachricht (62) oder eine Anforderungsnachricht (62) mit einem angeforderten Bremsmoment (87), das einem Nullwert entspricht, aussendet und das weitere Steuergerät (32) eine weitere Nachricht (62) an das Bremssteuergerät (28) sendet, um das Notbremsmoment (82) von mindestens einer Reibbremse (22) des Zugfahrzeugs (12) und/oder des Gespanns (10) anzufordern.

7. Verfahren nach einem der vorhergehenden Ansprüche, wobei der elektrische Antrieb (44) Bestandteil eines Anhängerfahrzeugs (16) ist und über den ersten Bus (40) zwischen dem Nutzfahrzeug (12) und dem Anhängerfahrzeug (16), die Statusnachricht (58) mit dem als Bremssteuergerät (28) ausgebildeten Steuergerät (28) empfangen und die Ansteuernachricht (56) mit dem Bremssteuergerät (28) ausgesendet wird, wobei i von einem Anhängerbremssteuergerät (42) die Statusnachricht (58) ausgesendet und die Ansteuernachricht (56) empfangen wird, und wobei der elektrische Antrieb (44) in Abhängigkeit von der Ansteuernachricht (56) vom Anhängerbremssteuergerät (52) angesteuert wird.

8. Bremssteuergerät (28), das eingerichtet ist, das Verfahren nach einem der vorhergehenden Ansprüche auszuführen, umfassend:
- eine erste Schnittstelle (41) zum Verbinden mit einem ersten Bus (40), der mit einem elektrischen Antrieb (44) oder einem Anhängerbremssteuergerät (42) verbunden ist, und zum Empfangen einer Statusnachricht (56) von dem elektrischen Antrieb (44), die anzeigt, dass von dem elektrischen Antrieb (44) ein bereitstellbares Bremsmoment (76) verfügbar ist,
- eine Rechnereinheit (59) zum Erzeugen einer Angebotsnachricht (60), die ein angebotenes Bremsmoment (77) anzeigt, in Abhängigkeit von der Statusnachricht (56) und
- eine zweite Schnittstelle (43) zum Verbinden mit einem zweiten Bus (36), der mit einem weiteren Steuergerät (32) verbunden ist, und zum Aussenden der Angebotsnachricht (60) an das mindestens eine weitere Steuergerät (32).

9. Bremssystem (23) mit einem Bremssteuergerät (38) nach Anspruch 8 und einem weiteren Steuergerät (32) zum Ausführen eines Verfahrens nach einem der vorhergehenden Ansprüche.

10. Bremssystem (23) nach Anspruch 9, wobei das Bremssystem (23) außerdem ein Anhängerbremssteuergerät (42) umfasst, wobei das Anhängerbremssteuergerät (42) eingerichtet ist, eine Statusnachricht (58) von einem mit dem Anhängerbremssteuergerät (42) verbundenen elektrischen Antrieb (44) zu empfangen und an ein Bremssteuergerät (28) weiterzuleiten, und zum Empfangen einer Ansteuernachricht (56) vom Bremssteuergerät (28) und Ansteuern des elektrischen Antriebs (44) in Abhängigkeit von der Ansteuernachricht (56).

11. Bremssystem (23) nach Anspruch 9 oder 10, wobei das Bremssteuergerät (28) mit dem weiteren Steuergerät (32) über einen zweiten Bus (36) verbunden ist, wobei der zweite Bus (36) eingerichtet ist, um Nachrichten (60, 62, 64, 66) mit oder gemäß dem SAE J1939 Protokoll zu übertragen.

12. Bremssystem nach Anspruch 10 oder 11, wobei das Bremssteuergerät (28) und das Anhängerbremssteuergerät (42) über einen ersten Bus (40) verbindbar sind.

13. Nutzfahrzeug (12) mit einem Bremssteuergerät (28) nach Anspruch 8 oder einem Bremssystem (23) nach einem der Ansprüche 9 bis 12, wobei das Nutzfahrzeug (12) einen Retarder (38) aufweist.

14. Gespann (10) mit einem Nutzfahrzeug (12) nach Anspruch 13 und einem Anhängerfahrzeug (16).

15. Computerprogrammprodukt, das Instruktionen umfasst, die, wenn sie auf mindestens einer Rechnereinheit (59) und/oder einem Bremssteuergerät (28), insbesondere nach Anspruch 8, ausgeführt werden, die Rechnereinheit (59) und/oder das Bremssteuergerät (28) veranlassen, die Schritte (72-74) des Verfahrens nach einem der Ansprüche 1 bis 4 auszuführen oder
wenn sie auf einem Bremssteuergerät (28) und einem weiteren Steuergerät (32), eines Systems (23) nach einem der Ansprüche 9 bis 12, ausgeführt werden, das Bremssteuergerät (28) und das weitere Steuergerät (32) veranlassen, die Schritte (72-74) des Verfahrens nach einem der Ansprüche 1 bis 7 auszuführen.

## Claims

1. Method for a commercial vehicle (12), in particular a towing vehicle (12), or a combination (10) having a commercial vehicle (12), the method comprising the following steps carried out by a control device (28), preferably a brake control device (28), of the commercial vehicle (12):
- receiving (70) a status message (58) from an electric drive (44) of the commercial vehicle (12) and/or a trailer vehicle (16) towed by the commercial vehicle (12), which status message indicates that a providable braking torque (76) is available from the electric drive (44),
- generating (72) an offer message (60) by means of a computer unit (59), which offer message indicates an offered braking torque (77) from the electric drive (44), on the basis of the status message (58) and
- transmitting (74) the offer message (60) to or for at least one further control device (32) of the commercial vehicle (12).

2. Method according to claim 1, wherein the status message (58) is received via a first bus (40) connected to the control device (28), and the offer message (60) is transmitted on a second bus (40) connected to the control device (28), wherein the offer message (60) is transmitted to or for the further control device (32).

3. Method according to claim 1 or 2, wherein the method comprises the following further steps carried out by the control device (28):
- receiving a request message (62) from the further control device (32), by means of which request message a requested braking torque (87) is requested,
- generating an actuation message (56) for actuating the electric drive (44) in order to generate the requested braking torque (87) by means of the electric drive (44), wherein the actuation message (56) is generated on the basis of the request message (62) and
- transmitting the actuation message (56) to the electric drive (44).

4. Method according to any of the preceding claims, wherein in the event of a triggering of a safety system (30) detected by the control device (28),
- an offer message (60) is generated and transmitted by the control device (28), which offer message indicates an offered braking torque (77) that corresponds to a zero value and/or
- the control device (28) generates and transmits an actuation message (56) in order to actuate the electric drive (44) to generate a requested braking torque (87) having a zero value, irrespective of a received request message (62).

5. Method according to any of the preceding claims, wherein the further control device (32) receives or generates a desired service braking torque (80) from a further control device (32), wherein the further control device (32)
a) generates and transmits a request message (62) which corresponds to the desired service braking torque (80) in the event that the desired service braking torque (80) is less than or equal to the braking torque (77) offered by the offer message (60) or
b1) generates and transmits a request message (62) which corresponds to the offered braking torque (77), and the further control device (32) generates a further message (64) and transmits it to the brake control device (28), by means of which an additional braking torque (94) is requested, which corresponds to a difference (95) between the desired service braking torque (80) and the offered braking torque (77), in the event that the desired service braking torque (80) is greater than the braking torque (77) offered by the offer message (60) or
b2) generates and transmits a request message (60) using the further control device (32), which request message corresponds to the offered braking torque (77), in the event that the desired service braking torque (80) is greater than the braking torque (77) offered by the offer message (60) and the commercial vehicle (12) has a retarder (38), and
i) in the event that the difference (95) between the desired service braking torque (80) and the offered braking torque (77) is less than or equal to a retarder braking torque (102) that can be provided by the retarder (38), a further message (66) is transmitted by the further control device (32) to the retarder (38), by means of which further message a retarder braking torque (104) is requested from the retarder (38), which retarder braking torque corresponds to the difference (95) or
ii) in the event that the difference (95) between the desired service braking torque (80) and the offered braking torque (77) is greater than a retarder braking torque (102) which can be provided by the retarder (38), a further message (66) is transmitted to the retarder (38) by the further control device (32), by means of which further message a retarder braking torque (104), which corresponds to the providable retarder braking torque (102), is requested from the retarder (38) and a further message (64) is transmitted to the brake control device (28) by the further control device (32), by means of which an additional braking torque (94) is requested which corresponds to a further difference (105) between the desired service braking torque (80) and the providable retarder braking torque (102) added to the offered braking torque (77).

6. Method according to any of the preceding claims, wherein in the event of a desired emergency braking torque (82) received or generated by the further control device (32), the further control device (32) does not transmit a request message (62) or a request message (62) having a requested braking torque (87) that corresponds to a zero value, and the further control device (32) transmits a further message (62) to the brake control device (28) in order to request the emergency braking torque (82) from at least one friction brake (22) of the towing vehicle (12) and/or the combination (10).

7. Method according to any of the preceding claims, wherein the electric drive (44) is a component of a trailer vehicle (16), and, via the first bus (40) between the commercial vehicle (12) and the trailer vehicle (16), the status message (58) is received by the control device (28) designed as a brake control device (28), and the actuation message (56) is transmitted by the brake control device (28), wherein i the status message (58) is transmitted and the actuation message (56) is received by a trailer brake control device (42), and wherein the electric drive (44) is actuated by the trailer brake control device (52) on the basis of the actuation message (56).

8. Brake control device (28) which is designed to carry out the method according to any of the preceding claims, comprising:
- a first interface (41) for connecting to a first bus (40), which is connected to an electric drive (44) or a trailer brake control device (42), and for receiving a status message (56) from the electric drive (44), which status message indicates that a providable braking torque (76) is available from the electric drive (44),
- a computer unit (59) for generating an offer message (60) which indicates an offered braking torque (77) on the basis of the status message (56) and
- a second interface (43) for connecting to a second bus (36), which is connected to a further control device (32), and for transmitting the offer message (60) to the at least one further control device (32).

9. Brake system (23) comprising a brake control device (38) according to claim 8 and a further control device (32) for carrying out a method according to any of the preceding claims.

10. Brake system (23) according to claim 9, wherein the brake system (23) also comprises a trailer brake control device (42), wherein the trailer brake control device (42) is designed to receive a status message (58) from an electric drive (44) connected to the trailer brake control device (42) and to forward it to a brake control device (28), and to receive an actuation message (56) from the brake control device (28) and to actuate the electric drive (44) on the basis of the actuation message (56).

11. Brake system (23) according to claim 9 or 10, wherein the brake control device (28) is connected to the further control device (32) via a second bus (36), wherein the second bus (36) is designed to transfer messages (60, 62, 64, 66) by or according to the SAE J1939 protocol.

12. Brake system according to claim 10 or 11, wherein the brake control device (28) and the trailer brake control device (42) can be connected via a first bus (40).

13. Commercial vehicle (12) comprising a brake control device (28) according to claim 8 or a brake system (23) according to any of claims 9 to 12, wherein the commercial vehicle (12) has a retarder (38).

14. Combination (10) comprising a commercial vehicle (12) according to claim 13 and a trailer vehicle (16).

15. Computer program product comprising instructions which, when executed on at least one computer unit (59) and/or a brake control device (28), in particular according to claim 8, prompt the computer unit (59) and/or the brake control device (28) to carry out the steps (72-74) of the method according to any of claims 1 to 4, or
when the instructions are executed on a brake control device (28) and a further control device (32) of a system (23) according to any of claims 9 to 12, prompt the brake control device (28) and the further control device (32) to carry out the steps (72-74) of the method according to any of claims 1 to 7.

## Revendications

1. Procédé pour un véhicule utilitaire (12), en particulier un véhicule tracteur (12), ou un attelage (10) comportant un véhicule utilitaire (12), comprenant les étapes exécutées à l'aide d'un appareil de commande (28), de préférence un appareil de commande de freinage (28), du véhicule utilitaire (12) :
- réception (70) d'un message d'état (58) en provenance d'un entraînement électrique (44) du véhicule utilitaire (12) et/ou d'un véhicule remorque (16) tracté par le véhicule utilitaire (12), lequel message d'état indique qu'un couple de freinage (76) pouvant être fourni par l'entraînement électrique (44) est disponible,
- génération (72) d'un message d'offre (60) à l'aide d'une unité de calcul (59), lequel message d'offre indique un couple de freinage (77) offert par l'entraînement électrique (44), en fonction du message d'état (58) et
- envoi (74) du message d'offre (60) à ou pour au moins un autre appareil de commande (32) du véhicule utilitaire (12).

2. Procédé selon la revendication 1, dans lequel le message d'état (58) est reçu par l'intermédiaire d'un premier bus (40) connecté à l'appareil de commande (28) et le message d'offre (60) est envoyé sur un second bus (40) connecté à l'appareil de commande (28), dans lequel le message d'offre (60) est envoyé à ou pour l'autre appareil de commande (32).

3. Procédé selon la revendication 1 ou 2, dans lequel le procédé comprend les autres étapes exécutées à l'aide de l'appareil de commande (28) :
- réception d'un message de demande (62) en provenance de l'autre appareil de commande (32), par lequel message de demande un couple de freinage demandé (87) est demandé,
- génération d'un message de commande (56) destiné à la commande de l'entraînement électrique (44) afin de générer le couple de freinage demandé (87) à l'aide de l'entraînement électrique (44), dans lequel la génération du message de commande (56) est effectuée en fonction du message de demande (62) et
- envoi du message de commande (56) à l'entraînement électrique (44).

4. Procédé selon l'une des revendications précédentes, dans lequel, dans le cas d'un déclenchement, détecté par l'appareil de commande (28), d'un système de sécurité (30),
- un message d'offre (60) est généré et envoyé par l'appareil de commande (28), lequel message d'offre indique un couple de freinage (77) offert qui correspond à une valeur nulle et/ou
- l'appareil de commande (28) génère et envoie un message de commande (56) afin de commander l'entraînement électrique (44) pour générer un couple de freinage demandé (87) comportant une valeur nulle, indépendamment d'un message de demande (62) reçu.

5. Procédé selon l'une des revendications précédentes, dans lequel l'autre appareil de commande (32) reçoit un couple de freinage de service souhaité (80) en provenance d'un autre appareil de commande (32) ou le génère, dans lequel l'autre appareil de commande (32)
a) dans le cas où le couple de freinage de service souhaité (80) est inférieur ou égal au couple de freinage (77) offert par le message d'offre (60), génère et envoie un message de demande (62) qui correspond au couple de freinage de service souhaité (80) ou
b1) dans le cas où le couple de freinage de service souhaité (80) est supérieur au couple de freinage (77) offert par le message d'offre (60), génère et envoie un message de demande (62) qui correspond au couple de freinage (77) offert, et l'autre appareil de commande (32) génère un autre message (64) et l'envoie à l'appareil de commande de freinage (28), par lequel message un couple de freinage supplémentaire (94) est demandé, lequel couple de freinage supplémentaire correspond à une différence (95) entre le couple de freinage de service souhaité (80) et le couple de freinage (77) offert, ou
b2) dans le cas où le couple de freinage de service souhaité (80) est supérieur au couple de freinage (77) offert par le message d'offre (60) et le véhicule utilitaire (12) possède un ralentisseur (38), génère et envoie un message de demande (60) à l'aide de l'autre appareil de commande (32), lequel message de demande correspond au couple de freinage (77) offert et
i) dans le cas où la différence (95) entre le couple de freinage de service souhaité (80) et le couple de freinage (77) offert est inférieure ou égale à un couple de freinage de ralentisseur (102) pouvant être fourni par le ralentisseur (38), un autre message (66) est envoyé par l'autre appareil de commande (32) au ralentisseur (38), par lequel message un couple de freinage de ralentisseur (104) est demandé au ralentisseur (38), lequel couple de freinage de ralentisseur correspond à la différence (95) ou
ii) dans le cas où la différence (95) entre le couple de freinage de service souhaité (80) et le couple de freinage (77) offert est supérieure à un couple de freinage de ralentisseur (102) pouvant être fourni par le ralentisseur (38), un autre message (66) est envoyé par l'autre appareil de commande (32) au ralentisseur (38), par lequel message un couple de freinage de ralentisseur (104) est demandé au ralentisseur (38), lequel couple de freinage de ralentisseur correspond au couple de freinage de ralentisseur (102) pouvant être fourni, et un autre message (64) est envoyé par l'autre appareil de commande (32) à l'appareil de commande de freinage (28), par lequel message un couple de freinage supplémentaire (94) est demandé, lequel couple de freinage supplémentaire correspond à une autre différence (105) entre le couple de freinage de service souhaité (80) et le couple de freinage de ralentisseur (102) pouvant être fourni ajouté au couple de freinage (77) offert.

6. Procédé selon l'une des revendications précédentes, dans lequel l'autre appareil de commande (32), dans le cas d'un couple de freinage d'urgence souhaité (82) reçu ou généré par l'autre appareil de commande (32), n'envoie aucun message de demande (62) ou envoie un message de demande (62) comportant un couple de freinage demandé (87) qui correspond à une valeur nulle, et l'autre appareil de commande (32) envoie un autre message (62) à l'appareil de commande de freinage (28) afin de demander le couple de freinage d'urgence (82) à au moins un frein à friction (22) du véhicule tracteur (12) et/ou de l'attelage (10).

7. Procédé selon l'une des revendications précédentes, dans lequel l'entraînement électrique (44) fait partie d'un véhicule remorque (16) et, par l'intermédiaire du premier bus (40) entre le véhicule utilitaire (12) et le véhicule remorque (16), le message d'état (58) est reçu à l'aide de l'appareil de commande (28) réalisé en tant qu'appareil de commande de freinage (28) et le message de commande (56) est envoyé à l'aide de l'appareil de commande de freinage (28), dans lequel i le message d'état (58) est envoyé et le message de commande (56) est reçu par un appareil de commande de freinage de remorque (42), et dans lequel l'entraînement électrique (44) est commandé par l'appareil de commande de freinage de remorque (52) en fonction du message de commande (56).

8. Appareil de commande de freinage (28), lequel est configuré pour exécuter le procédé selon l'une des revendications précédentes, comprenant :
- une première interface (41) destinée à la connexion à un premier bus (40) qui est connecté à un entraînement électrique (44) ou à un appareil de commande de freinage de remorque (42), et destinée à la réception d'un message d'état (56) en provenance de l'entraînement électrique (44), lequel message d'état indique qu'un couple de freinage (76) pouvant être fourni par l'entraînement électrique (44) est disponible,
- une unité de calcul (59) destinée à générer un message d'offre (60) qui indique un couple de freinage (77) offert, en fonction du message d'état (56) et
- une seconde interface (43) destinée à la connexion à un second bus (36) qui est connecté à un autre appareil de commande (32), et destinée à l'envoi du message d'offre (60) à l'au moins un autre appareil de commande (32).

9. Système de freinage (23) comportant un appareil de commande de freinage (38) selon la revendication 8 et un autre appareil de commande (32) destiné à l'exécution d'un procédé selon l'une des revendications précédentes.

10. Système de freinage (23) selon la revendication 9, dans lequel le système de freinage (23) comprend en outre un appareil de commande de freinage de remorque (42), dans lequel l'appareil de commande de freinage de remorque (42) est configuré pour recevoir un message d'état (58) en provenance d'un entraînement électrique (44) connecté à l'appareil de commande de freinage de remorque (42) et pour le transmettre à un appareil de commande de freinage (28), et pour recevoir un message de commande (56) en provenance de l'appareil de commande de freinage (28) et commander l'entraînement électrique (44) en fonction du message de commande (56).

11. Système de freinage (23) selon la revendication 9 ou 10, dans lequel l'appareil de commande de freinage (28) est connecté à l'autre appareil de commande (32) par l'intermédiaire d'un second bus (36), dans lequel le second bus (36) est configuré pour transmettre des messages (60, 62, 64, 66) avec ou selon le protocole SAE J1939.

12. Système de freinage selon la revendication 10 ou 11, dans lequel l'appareil de commande de freinage (28) et l'appareil de commande de freinage de remorque (42) peuvent être connectés par l'intermédiaire d'un premier bus (40).

13. Véhicule utilitaire (12) comportant un appareil de commande de freinage (28) selon la revendication 8 ou un système de freinage (23) selon l'une des revendications 9 à 12, dans lequel le véhicule utilitaire (12) présente un ralentisseur (38).

14. Attelage (10), comportant un véhicule utilitaire (12) selon la revendication 13 et un véhicule remorque (16).

15. Produit programme informatique qui comprend des instructions qui, lorsqu'elles sont exécutées sur au moins une unité de calcul (59) et/ou un appareil de commande de freinage (28), en particulier selon la revendication 8, amènent l'unité de calcul (59) et/ou l'appareil de commande de freinage (28) à exécuter les étapes (72-74) du procédé selon l'une des revendications 1 à 4 ou
lorsqu'elles sont exécutées sur un appareil de commande de freinage (28) et un autre appareil de commande (32), d'un système (23) selon l'une des revendications 9 à 12, amènent l'appareil de commande de freinage (28) et l'autre appareil de commande (32) à exécuter les étapes (72-74) du procédé selon l'une des revendications 1 à 7.
